# FASCICULE DE BREVET EUROPEEN

(11) **EP 1 430 456 B1**
(45) Date de publication et mention de la délivrance du brevet: **20.12.2006**
(21) Numéro de dépôt: 02774925.8
(22) Date de dépôt: 23.09.2002
(51) Int. Cl.: G07F 19/00

(54) **INSTALLATION DE PAIEMENT ELECTRONIQUE POUR L'ACHAT DE BIENS OU SERVICES PROPOSES PAR UN SERVEUR MARCHAND ET PROCEDE MIS EN OEUVRE DANS UNE TELLE INSTALLATION**
ANLAGE ZUR ELEKTRONISCHEN ZAHLUNG ZUM EINKAUFEN VON VON EINEN HÄNDLERSERVER VORGESCHLAGENEN DIENSTEN ODER GÜTERN UND VERFAHREN ZUM BETREIBEN EINE SOLCHE ANLAGE
ELECTRONIC PAYMENT SYSTEM THAT IS USED TO PURCHASE GOODS OR SERVICES OFFERED BY A MERCHANT SERVER AND THE METHOD USED IN ONE SUCH SYSTEM

(30) Priorité: 25.09.2001 FR 0112331
(43) Date de publication de la demande: 23.06.2004
(73) Titulaire: FRANCE TELECOM, 75015 Paris (FR)
(72) Inventeur: RAFFLE, Yvan, F-14370 Argences (FR); HANNECART, Eric, F-59230 Wasquehal (FR)
(74) Mandataire: de la Bigne, Guillaume Michel Marie
(86) Numéro de dépôt international: PCT/FR2002/003245
(87) Numéro de publication internationale: WO 2003/027971

(56) Documents cités:
- WO-A-00/30052
- WO-A-01/39468
- WO-A-01/63568
- US-A- 5 594 789
- US-A- 6 016 476

## Description

La présente invention concerne une installation de paiement électronique du type comportant au moins une passerelle pour l'achat de biens ou services proposés par au moins un serveur marchand, la passerelle comprenant des moyens d'échange d'informations pour l'émission d'une demande de paiement électronique d'au moins un bien ou service à destination du serveur marchand. L'invention concerne aussi un procédé mis en oeuvre dans une telle installation.

Généralement, une telle installation comporte un terminal installé chez chaque utilisateur et formant passerelle entre l'utilisateur et le reste de l'installation. Ce terminal possède des moyens d'échange d'informations capables d'échanger des informations compatibles avec le protocole d'application sans fil WAP (pour "Wireless Application Protocol") ou le protocole Internet IP (pour "Internet Protocol"). Il s'agit par exemple d'un micro-ordinateur équipé de moyens de connexion à Internet.

Malheureusement, le nombre d'utilisateurs en possession d'un micro-ordinateur est encore limité, soit parce que son utilisation n'est pas simple, soit parce que son prix est élevé.

L'invention vise à remédier aux inconvénients d'une installation classique, en créant une installation simple d'utilisation et accessible par un grand nombre d'utilisateurs.

WO 01/39468 décrit une installation de paiement électronique comportant au moins une passerelle pour l'achat de biens ou services proposés par au moins un serveur marchand, la passerelle comprenant :
- des moyens d'échange d'informations pour l'émission d'une demande de paiement électronique d'au moins un bien ou service à destination du serveur marchand ;
- un serveur vocal, accessible par un utilisateur à travers un réseau de télécommunication au moyen d'un appareil de téléphonie pour la génération de la demande de paiement, et une interface de transcription de la demande de paiement entre le serveur vocal et les moyens d'échange d'informations ;
- des moyens de réception du bien ou service payé, et des moyens de transmission de ce bien ou service à l'utilisateur,
L'invention a donc pour objet une installation du type précité, caractérisée en ce qu'elle comprend en outre des moyens de gestion de transactions financières et des moyens de transmission de la demande de paiement électronique à ces moyens de gestion, les moyens de gestion de transactions financières comportant des moyens de transmission d'une demande d'authentification de l'émetteur de la demande de paiement électronique aux moyens d'échange d'informations de la passerelle, des moyens de transmission d'un contrat de paiement à la passerelle lorsque l'émetteur de la demande de paiement électronique est authentifié, et des moyens d'autorisation de la transmission du bien ou service après vérification d'un mot de passe de l'utilisateur, fourni par ce dernier on acceptant le contrat.

Ainsi, la demande de paiement vocale émise par l'utilisateur à destination du serveur vocal est transcrite par l'interface en une demande de paiement compatible avec le protocole utilisé par les moyens d'échange d'informations, celle-ci pouvant alors être transmise au serveur marchand.

De la sorte, l'installation selon l'invention permet à un grand nombre d'utilisateurs d'accéder au paiement électronique de biens ou services proposés sur un serveur marchand en mode vocal à l'aide d'appareils de téléphonie fixes ou mobiles. En effet, un grand nombre d'utilisateurs possède un appareil de téléphonie.

L'installation de paiement électronique selon l'invention peut en outre comporter l'une ou plus des caractéristiques suivantes :
- l'interface de transcription comporte un analyseur vocal pour traduire des informations vocales en informations alphanumériques, et un synthétiseur vocal pour traduire des informations alphanumériques en informations vocales.
- la passerelle est une passerelle d'accès à un réseau de transmission d'informations et le serveur marchand est accessible par ce réseau ;
- le serveur marchand comporte la passerelle ;
- la passerelle comportant en outre des moyens de réception du bien ou service payé, elle comporte des moyens de transmission de ce bien ou service à l'utilisateur; et
- les moyens d'échange d'informations utilisent le protocole de transfert de données de type HyperText HTTP.

L'invention a également pour objet un procédé de paiement électronique entre un utilisateur et au moins un serveur marchand pour la fourniture d'un bien ou service, mis en oeuvre par une installation selon l'une quelconque des revendications précédentes et comportant une session de paiement du bien ou service, comportant en outre une étape de communication téléphonique entre l'utilisateur et le serveur vocal de la passerelle pendant laquelle a lieu la session de paiement, caractérisé en ce que lors de la session de paiement, les moyens de gestion de transactions financières :
- transmettent une demande d'authentification de l'émetteur de la demande de paiement électronique aux moyens d'échange d'informations de la passerelle;
- transmettent un contrat de paiement à la passerelle lorsque l'émetteur de la demande de paiement électronique est authentifié ; et
- autorisent la transmission du bien ou service après vérification d'un mot de passe de l'utilisateur, fourni par ce dernier en acceptant le contrat.

L'invention sera mieux comprise à l'aide de la description qui va suivre, donnée uniquement à titre d'exemple et faite en se référant aux dessins annexés sur lesquels :
- la figure 1 représente schématiquement la structure d'une installation de paiement électronique selon l'invention ; et
- la figure 2 est un diagramme illustrant les étapes d'un procédé de paiement électronique mis en oeuvre dans l'installation de la figure 1.

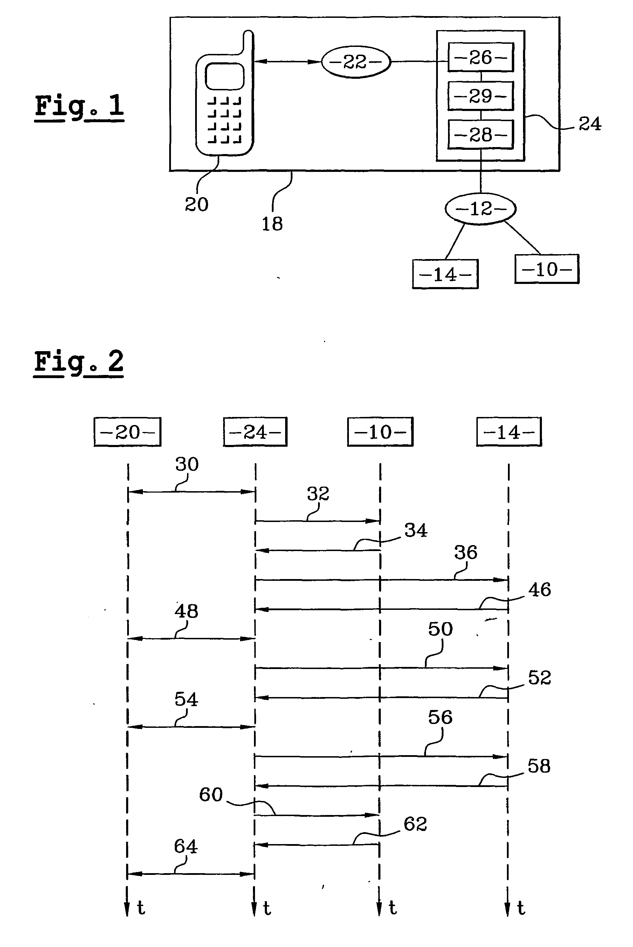

L'installation représentée à la figure 1 comporte un serveur marchand 10 relié à un réseau de transmission d'informations 12, tel qu'internat, Le serveur marchand 10 propose l'achat de biens ou services payants à travers le réseau Internet 12.

Pour cela, des moyens 14 de gestion de transactions financières sont également reliés au réseau Internet 12. Ces moyens 14 sont par exemple installés sur un serveur distant, mais pourraient également être hébergés par le serveur marchand 10.

De façon classique, le serveur marchand 10 et les moyens 14 de gestion de transactions financières sont adaptés pour la mise en oeuvre d'un procédé de paiement électronique classique, tel que le procédé iPIN ™.

L'installation comporte en outre des moyens 18 d'accès au réseau Internet 12 pour l'achat par paiement électronique des biens ou services proposés par le serveur marchand 10.

Les moyens d'accès 18 comportent un appareil de téléphonie 20 pouvant entrer en communication, via un réseau de télécommunication 22, avec une passerelle 24 d'accès au réseau Internet 12. Si l'appareil de téléphonie 20 est un téléphone mobile, le réseau de télécommunication 22 est par exemple un réseau du type GSM, GPRS ou UMTS. Si l'appareil de téléphonie 20 est un téléphone fixe, le réseau de télécommunication est par exemple le réseau de téléphonie commuté classique, un réseau numérique à intégration de services ou un réseau de type xDSL.

La passerelle d'accès 24 comporte un serveur vocal 26 pour l'échange d'informations via le réseau de télécommunication 22 avec l'appareil de téléphonie 20.

La passerelle d'accès 24 comporte en outre des moyens 28 d'échange d'informations avec le réseau Internet 12 associés à une interface de transcription 29, pour la transcription de données compatibles avec le format exigé par le serveur vocal 26 en données compatibles avec le format exigé par les moyens 28 d'échange d'informations, et réciproquement.

L'interface de transcription 29 comporte donc un analyseur vocal classique pour traduire des informations vocales en informations alphanumériques, et un synthétiseur vocal classique pour effectuer l'opération inverse.

De façon classique également, les moyens 28 d'échange d'informations utilisent des fichiers dont le format est compatible avec le protocole de transfert de données de type HyperText HTTP (pour "HyperText Transfer Protocol"). Conformément à ce protocole, tout échange d'informations entre émetteur et un récepteur comporte une requête de l'émetteur suivie d'une réponse du récepteur.

Le fonctionnement de cette installation de paiement électronique va maintenant être détaillé, en référence à la figure 2.

Sur cette figure, on a représenté les différentes étapes d'un procédé de paiement électronique mis en oeuvre par l'appareil de téléphonie 20 et la passerelle d'accès 24 d'une part, et par le serveur marchand 10 et les moyens 14 de gestion de transactions financières, d'autre part.

On notera que, conformément à un procédé de micropaiement électronique tel que le procédé iPIN ™, un utilisateur doit au préalable s'inscrire auprès des moyens 14 de gestion de transactions. Cette inscription consiste en l'enregistrement par l'utilisateur d'un nom d'accès associé à un mot de passe connu de lui seul, ainsi qu'en l'enregistrement d'une question et d'une réponse secrètes, également connues de lui seul.

Lors d'une première étape 30, un utilisateur compose un numéro de téléphone prédéterminé à partir de l'appareil de téléphonie 20. Ce numéro de téléphone permet d'entrer en communication avec le serveur vocal 26 mais est spécifique au serveur marchand 10 ou à un ensemble de serveurs marchands incluant ce serveur marchand 10. Ainsi, si la passerelle 24 permet d'accéder à plusieurs serveurs marchands, son serveur vocal pourra être accessible par plusieurs numéros, chacun permettant l'accès à au moins un serveur marchand.

Le serveur vocal 26 propose à l'utilisateur un menu lui permettant de choisir un bien ou service proposé par le serveur marchand 10. Lors de cette même étape, le client renseigne le serveur vocal sur son choix d'un produit ou un service.

Lors de l'étape 32 suivante, la requête vocale du client est traitée par les moyens de transcription 29, puis fournie aux moyens d'échange d'informations 28 sous forme d'un fichier de type HyperText. Ce fichier est ensuite transmis sous forme d'une première requête HTTP, au serveur marchand 10.

En réponse à cette requête, lors d'une étape 34, le serveur marchand 10 renvoie aux moyens 28 d'échange d'informations une réponse HTTP comportant une demande de paiement du produit et/ou service requis par le client, destinée aux moyens 14 de gestion de transactions financières.

Lors de l'étape 36 suivante, les moyens 28 d'échange d'informations envoient une deuxième requête HTTP de transmission de la demande de paiement aux moyens 14 de gestion de transactions financières. Cette deuxième requête HTTP comporte des données d'identification de l'utilisateur. Par exemple, ces données peuvent comporter le numéro de téléphone de l'appareil 20.

En réponse à la deuxième requête HTTP, lors d'une étape 46, les moyens 14 de gestion de transactions financières renvoient aux moyens 28 d'échange d'informations une demande d'authentification de l'utilisateur, après avoir vérifié à partir des données d'identification que l'utilisateur est autorisé à émettre une demande de paiement. La demande d'authentification comporte une demande d'adresse électronique de l'utilisateur et la demande de la réponse associée à la question secrète.

Cette demande d'authentification reçue par les moyens 28 d'échange d'informations est transcrite par les moyens de transcription 29 et fournie au serveur vocal 26 lors d'une étape 48. Au cours de cette étape, le serveur vocal 26 et l'utilisateur communiquent, via le réseau de télécommunication 22, selon un procédé d'authentification vocal connu.

Lors de l'étape 50 suivante, la passerelle d'accès 24 envoie au serveur de gestion de transaction financière une troisième requête HTTP de demande de contrat de paiement, cette requête comportant l'adresse électronique ainsi que la réponse secrète de l'utilisateur.

Après validation de la réponse à la question secrète, les moyens 14 de gestion de transactions financières renvoient aux moyens 28 d'échange d'informations, lors d'une étape 52, une réponse HTTP contenant un contrat de paiement.

Ensuite, lors d'une étape 54, les moyens de transcription 29 traduisent ce contrat de paiement en un contrat de paiement compatible avec le format du serveur vocal 26. Ce dernier propose alors le contrat de paiement à l'utilisateur. Lors de cette même étape, l'utilisateur accepte le contrat de paiement en fournissant son mot de passe.

Celui-ci est transcrit par les moyens de transcription 29 et fourni aux moyens 28 d'échange d'informations.

Ensuite, lors d'une étape 56 de transmission de la réponse, les moyens 28 d'échange d'informations envoient une quatrième requête HTTP aux moyens 14 de gestion de transactions financières, cette requête comportant le mot de passe de l'utilisateur.

En réponse, lors d'une étape 58, si le mot de passe est correct, les moyens 14 de gestion de transactions financières renvoient aux moyens 28 d'échange d'informations une autorisation de livraison du bien ou service acheté, à transmettre au serveur marchand 10.

Ainsi, lors de l'étape 60 suivante, les moyens 28 d'échange d'informations envoient au serveur marchand 10 une cinquième requête HTTP de demande de livraison du bien ou service acheté.

En réponse, le serveur marchand 10 renvoie aux moyens 28 d'échange d'informations, lors d'une étape 62, un message comportant le bien ou service acheté, si celui-ci peut être livré sous forme numérique, ou une confirmation de la livraison prochaine du bien ou service, sinon.

Lors de la dernière étape 64, si le bien ou service acheté peut être livré sous forme numérique, les moyens 28 d'échange d'informations renvoient le bien ou service acheté à l'adresse électronique fournie par l'utilisateur, par exemple, et informent celui-ci de la réception de son bien ou service, via le serveur vocal 26 ou par l'envoi d'un message de type SMS en direction de l'appareil de téléphonie 20 si ce dernier est un téléphone mobile.

On notera que tout au long du procédé décrit précédemment, de l'étape 30 à l'étape 64, l'utilisateur reste en communication téléphonique avec le serveur vocal 26.

Ainsi, on peut envisager de facturer la communication téléphonique en fonction du prix du bien ou service.

Il apparaît clairement qu'une installation de paiement électronique selon l'invention permet à un grand nombre d'utilisateurs d'accéder à ce mode de paiement. En effet, l'échange d'informations entre l'utilisateur et le serveur vocal 26 est convivial et simple d'utilisation, à partir d'un appareil téléphonique classique.

Un autre avantage de l'installation de paiement électronique décrite précédemment est qu'elle permet la mise en oeuvre d'un procédé de paiement électronique classique fonctionnant selon le protocole HTTP, sans apporter de modification à ce dernier et de façon transparente pour l'utilisateur.

Beaucoup d'applications sont envisageables. Une telle installation peut notamment avantageusement s'appliquer au paiement d'une place de stationnement.

En effet, dans cette application, l'utilisateur appelle un numéro prédéterminé, par exemple indiqué à proximité de l'emplacement de stationnement de son véhicule, à l'aide de son téléphone mobile. L'utilisateur indique au serveur vocal des paramètres relatifs au stationnement de son véhicule, tels que la durée de stationnement souhaitée, le numéro d'immatriculation du véhicule. En fin de procédé, il est informé de son autorisation à stationner pendant la durée demandée.

Pour cette application particulière, un autre avantage de l'invention consiste à permettre à l'utilisateur de payer son stationnement ou de prolonger sa durée de stationnement par téléphone, sans l'obliger à retourner auprès de son véhicule stationné.

On notera que l'invention n'est pas limitée au mode de réalisation décrit précédemment.

En effet, en variante, les moyens 28 d'échange d'informations, l'interface de transcription 29 et le serveur vocal 26 pourraient être hébergés par le serveur marchand 10.

## Revendications

1. Installation de paiement électronique comportant au moins une passerelle (24) pour l'achat de biens ou services proposés par au moins un serveur marchand (10), la passerelle comprenant :
- des moyens (28) d'échange d'informations pour l'émission d'une demande de paiement électronique d'au moins un bien ou service à destination du serveur marchand (10) :
- un serveur vocal (26), accessible par un utilisateur à travers un réseau de télécommunication (22) au moyen d'un appareil de téléphonie (20) pour la génération de la demande de paiement, et une interface (29) de transcription de la demande de paiement entre le serveur vocal (26) et les moyens d'échange d'informations (28) ;
- des moyens de réception (28) du bien ou service payé, et des moyens de transmission (28) de ce bien ou service à l'utilisateur,
**caractérisée en ce que** l'installation de paiement électronique comprend en outre des moyens (14) de gestion de transactions financières et des moyens de transmission de la demande de paiement électronique à ces moyens de gestion (14), les moyens (14) de gestion de transactions financières comportant des moyens de transmission d'une demande d'authentification de l'émetteur de la demande de paiement électronique aux moyens (28) d'échange d'informations de la passerelle (24), des moyens de transmission d'un contrat de paiement à la passerelle (24) lorsque l'émetteur de la demande de paiement électronique est authentifié, et des moyens d'autorisation de la transmission du bien ou service après vérification d'un mot de passe de l'utilisateur, fourni par ce dernier en acceptant le contrat.

2. Installation de paiement électronique selon la revendication 1, **caractérisée en ce que** l'interface de transcription (29) comporte un analyseur vocal pour traduire des informations vocales en informations alphanumériques, et un synthétiseur vocal pour traduire des informations alphanumériques en informations vocales.

3. Installation de paiement électronique selon la revendication 1 ou 2, **caractérisée en ce que** la passerelle (24) est une passerelle d'accès à un réseau (12) de transmission d'informations et **en ce que** le serveur marchand (10) est accessible par ce réseau.

4. Installation de paiement électronique selon la revendication 1 ou 2, **caractérisée en ce que** le serveur marchand (10) comporte la passerelle (24).

5. Installation de paiement électronique selon l'une quelconque des revendications 1 à 4, **caractérisée en ce que** les moyens d'échange d'informations (28) utilisent le protocole de transfert de données de type HyperText HTTP.

6. Procédé de paiement électronique entre un utilisateur et au moins un serveur marchand (10) pour la fourniture d'un bien ou service, mis en oeuvre par une installation selon l'une quelconque des revendications précédentes et comportant une session (32, 34, 36, 46, 48, 50, 52, 54, 56, 58, 60, 62) de paiement du bien ou service, comportant en outre une étape de communication téléphonique entre l'utilisateur et le serveur vocal (26) de la passerelle (24) pendant laquelle a lieu la session de paiement (32, 34, 36, 46, 48, 50, 52, 54, 58, 60, 62), **caractérisé en ce que** lors de la session de paiement, les moyens (14) de gestion de transactions financières :
- transmettent (46) une demande d'authentification de l'émetteur de la demande de paiement électronique aux moyens (28) d'échange d'informations de la passerelle (24) ;
- transmettent (52) un contrat de paiement à la passerelle (24) lorsque l'émetteur de la demande de paiement électronique est authentifié ; et
- autorisent (58) la transmission du bien ou service après vérification d'un mot de passe de l'utilisateur, fourni par ce dernier en acceptant le contrat.

## Claims

1. Electronic payment system comprising a gateway (24) for the purchase of goods or services offered by at least one merchant server (10), the gateway comprising:
- means (28) of exchanging information for the sending of an electronic payment request for at least one item of goods or one service to the merchant server (10);
- a voice server (26), accessible by a user through a telecommunications network (22) by means of a telephonic device (20) for the generation of the payment request, and an interface (29) for the transcription of the payment request between the voice server (26) and the information exchange means (28);
- means (28) of receiving the item of goods or the service paid for, and means (28) of transmission of that item of goods or that service to the user,
**characterized in that** the electronic payment system furthermore comprises means (14) of managing financial transactions and means of transmission of the electronic payment request to these management means (14), the means (14) of managing financial transactions comprising means of transmission of a request for authentication of the sender of the electronic payment request to the information exchange means (28) of the gateway (24), means of transmission of a payment contract to the gateway (24) when the sender of the electronic payment request is authenticated, and means of authorization of the transmission of the item of goods or of the service after verification of a password of the user, provided by the latter on accepting the contract.

2. Electronic payment system according to Claim 1, **characterized in that** the transcription interface (29) comprises a voice analyser to translate voice information into alphanumeric information, and a voice synthesizer to translate alphanumeric information into voice information.

3. Electronic payment system according to Claim 1 or 2, **characterized in that** the gateway (24) is an access gateway to an information transmission network (12) and **in that** the merchant server (10) can be accessed by that network.

4. Electronic payment system according to Claim 1 or 2, **characterized in that** the merchant server (10) comprises the gateway (24).

5. Electronic payment system according to any one of Claims 1 to 4, **characterized in that** the information exchange means (28) use the HTTP Hypertext data transfer protocol.

6. Electronic payment method between a user and at least one merchant server (10) for the provision of an item of goods or a service, used by a system according to any one of the preceding claims and comprising a session (32, 34, 36, 46, 48, 50, 52, 54, 56, 58, 60, 62) for paying for the item of goods or the service, furthermore comprising a step of telephonic communication between the user and the voice server (26) of the gateway (24) during which the payment session (32, 34, 36, 46, 48, 50, 52, 54, 56, 58, 60, 62) takes place, **characterized in that** during the payment session, the means (14) for managing financial transactions:
- transmit (46) a request for authentication of the sender of the electronic payment request to the information exchange means (28) of the gateway (24);
- transmit (52) a payment contract to the gateway (24) when the sender of the electronic payment request is authenticated; and
- authorize (58) the transmission of the item of goods or the service after verification of a password of the user, provided by the latter on accepting the contract.

## Patentansprüche

1. Elektronische Zahlungseinrichtung, die mindestens ein Gateway (24) für den Kauf von Gütern oder Diensten aufweist, die von mindestens einem Händler-Server (10) angeboten werden, wobei das Gateway aufweist:
- Informationsaustauschmittel (28) zum Senden einer elektronischen Zahlungsanfrage für mindestens ein Gut oder einen Dienst an den Händler-Server (10);
- einen Sprachserver (26), der für einen Benutzer über ein Fernsprechnetz (22) mittels eines Telefonapparats (20) zur Erzeugung der Zahlungsanfrage zugänglich ist, und eine Schnittstelle (29) zur Umsetzung der Zahlungsanfrage zwischen dem Sprachserver (26) und den Informationsaustauschmitteln (28);
- Empfangsmittel (28) des bezahlten Guts oder Diensts, und Übertragungsmittel (28) dieses Guts oder Diensts an den Benutzer,
**dadurch gekennzeichnet, dass** die elektronische Zahlungseinrichtung außerdem Mittel (14) zur Verwaltung von finanziellen Transaktionen und Mittel zur Übertragung der elektronischen Zahlungsanfrage an diese Verwaltungsmittel (14) aufweist, wobei die Mittel (14) zur Verwaltung von finanziellen Transaktionen Mittel zur Übertragung einer Authentifizierungsanfrage des Absenders der elektronischen zahlungsanfrage an die Informationsaustauschmittel (28) des Gateways (24), Mittel zur Übertragung eines Zahlungsvertrags an das Gateway (24), wenn der Absender der elektronischen Zahlungsanfrage authentifiziert ist, und Mittel zur Autorisierung der Übertragung des Guts oder des Diensts nach Überprüfung eines Passworts des Benutzers aufweisen, das von diesem letzteren beim Akzeptieren des Vertrags geliefert wird.

2. Elektronische Zahlungseinrichtung nach Anspruch 1, **dadurch gekennzeichnet, dass** die Umsetzungs-Schnittstelle (29) einen Sprachanalysierer aufweist, um Sprachinformationen in alphanumerische Informationen umzuwandeln, und einen Sprachsynthetisierer aufweist, um alphanumerische Informationen in Sprachinformationen umzuwandeln.

3. Elektronische Zahlungseinrichtung nach Anspruch 1 oder 2, **dadurch gekennzeichnet, dass** das Gateway (24) ein Zugriffs-Gateway auf ein Datenübertragungsnetz (12) ist, und dass der Händler-Server (10) über dieses Netz zugänglich ist.

4. Elektronische Zahlungseinrichtung nach Anspruch 1 oder 2, **dadurch gekennzeichnet, dass** der Händler-Server (10) das Gateway (24) aufweist.

5. Elektronische zahlungseinrichtung nach einem der Ansprüche 1 bis 4, **dadurch gekennzeichnet, dass** die Informationsaustauschmittel (28) das Datenübertragungsprotokoll vom Typ HyperText HTTP verwenden.

6. Elektronisches Zahlungsverfahren zwischen einem Benutzer und mindestens einem Händler-Server (10) zur Lieferung eines Guts oder eines Diensts, das von einer Einrichtung nach einem der vorhergehenden Ansprüche angewendet wird und eine Sitzung (32, 34, 36, 46, 48, 50, 52, 54, 56, 58, 50, 62) der Zahlung des Guts oder des Diensts und außerdem einen Schritt der telefonischen Kommunikation zwischen dem Benutzer und dem Sprachserver (26) des Gateways (24) aufweist, während der die Zahlungssitzung (32, 34, 36, 46, 48, 50, 52, 54, 58, 60, 62) stattfindet, **dadurch gekennzeichnet, dass** die Mittel (14) zur Verwaltung von finanziellen Transaktionen während der Zahlungssitzung:
- eine Authentifizierungsanfrage des Absenders der elektronischen Zahlungsanfrage an die Informationsaustauschmittel (28) des Gateways (24) übertragen (46);
- einen Zahlungsvertrag an das Gateway (24) übertragen (52), wenn der Absender der Zahlungsanfrage authentifiziert ist; und
- die Übertragung des Guts oder Diensts nach Überprüfung eines Passworts des Benutzers autorisieren (58), das von letzterem beim Akzeptieren des Vertrags geliefert wird.
